# FASCICULE DE BREVET EUROPEEN

(11) **EP 1 957 322 B1**
(45) Date de publication et mention de la délivrance du brevet: **08.07.2009**
(21) Numéro de dépôt: 06841848.2
(22) Date de dépôt: 04.12.2006
(51) Int. Cl.: B60R 21/20

(54) **PIECE D'HABILLAGE**
VERKLEIDUNGSELEMENT
TRIM ELEMENT

(30) Priorité: 06.12.2005 FR 0512363
(43) Date de publication de la demande: 20.08.2008
(73) Titulaire: Faurecia Interieur Industrie, 92000 Nanterre (FR)
(72) Inventeur: BAUDOUIN, Ivan, F-93600 Aulnay sous Bois (FR); BEAUPERE, Stéphane, F-60540 Bornel (FR); DERVOUT, Eric, F-60530 Neuilly en Thelle (FR); VAUPRE, François, F-27830 Neaufles Saint-Martin (FR)
(74) Mandataire: Domenego, Bertrand
(86) Numéro de dépôt international: PCT/FR2006/002639
(87) Numéro de publication internationale: WO 2007/065990

(56) Documents cités:
- WO-A-01/23221
- DE-U1- 29 821 409

## Description

L'invention concerne une pièce d'habillage, essentiellement d'habillage intérieur d'automobile, ayant une face apparente formée d'une peau disposée sur une couche de mousse de matière plastique, ainsi qu'un appareil destiné à former les entailles dans la peau d'une pièce d'habillage et un procédé de fabrication d'une pièce d'habillage.

On utilise de telles pièces d'habillage pour former un certain nombre de surfaces, et notamment des surfaces sous lesquelles sont cachés des sacs gonflables. Dans cette application, il est fréquent de délimiter, dans la peau de la pièce qui couvre le sac gonflable, une entaille qui délimite une partie destinée à se séparer, la peau se déchirant le long de l'entaille lorsque le sac gonflable fonctionne.

On a constaté que, dans cette application, on observait un certain nombre de défauts de rupture suivant l'entaille. On a attribué ces défauts au fait que, lorsque la pièce d'habillage est formée par moussage d'une matière plastique au contact de la peau, la matière plastique pénètre dans l'entaille et forme un pont pratiquement continu sur au moins une partie importante de la profondeur de l'entaille. L'entaille perd donc sa fonctionnalité, puisque la liaison assurée par la matière plastique entre les deux côtés de l'entaille peut être plus robuste que celle que donnerait le matériau de la peau lui-même sans entaille.

On a donc cherché à résoudre ce problème et on a ainsi proposé, dans le document DE-298 21 409 qui divulgue une pièce d'habillage selon le préambule de la revendication 1, la fermeture de l'ouverture de l'entaille, du côté de la mousse, par application d'une "laque protectrice" destinée à former un pont sur l'entaille et à empêcher ainsi la matière plastique de la mousse de pénétrer dans l'entaille.

Ce procédé a l'inconvénient de nécessiter une opération spécifique de formation d'un pont sur l'ouverture de l'entaille, dans une opération particulière qui s'ajoute aux autres étapes de fabrication. En outre, la pièce obtenue doit avoir un pont de fermeture à la fois peu résistant pour ne pas gêner la déchirure de la peau lors du fonctionnement d'un sac gonflable, et suffisamment robuste pour résister aux différentes manipulations entre sa fabrication et l'opération de moussage à l'intérieur d'un moule.

L'invention concerne la solution du problème précité d'une manière qui ne nécessite aucune opération supplémentaire de fabrication, et donc aucune augmentation de coût.

Plus précisément, selon l'invention, on donne à l'entaille une configuration qui empêche la formation d'un pont d'épaisseur étendue entre les deux côtés de l'entaille. Dans une première forme, la configuration de l'entaille délimite une ouverture si étroite que, compte tenu des propriétés de mouillage et de tension superficielle de la peau et de la matière plastique utilisée pour la formation de la mousse, la matière plastique fluide ne pénètre pratiquement pas dans l'entaille. Dans une seconde forme, l'entaille est si largement ouverte que la matière plastique pénètre et c'est la mousse de matière plastique peu résistante qui remplit le volume de l'entaille et ne réduit pratiquement pas l'aptitude de l'entaille à former une zone de rupture préférentielle.

Plus précisément, l'invention concerne une pièce d'habillage ayant une face apparente formée par une peau, la pièce étant du type qui comprend une peau disposée sur une mousse de matière plastique, la mousse étant liée à la peau par une couche continue de liaison formée spontanément à l'interface peau-mousse pendant l'opération de moussage de la matière plastique fluide au contact de la peau, la peau ayant un dispositif de rupture préférentielle comportant au moins une entaille qui débouche par une ouverture du côté opposé à la face apparente ; selon l'invention, dans toute la zone dans laquelle se trouve l'entaille pratiquement, la couche de liaison est au contact uniquement de la peau et de la mousse, et, au niveau de l'entaille et dans la direction de l'épaisseur de la peau, la couche de liaison est disposée sur l'ouverture avec une épaisseur très inférieure à la profondeur de l'entaille.

Dans un premier mode de réalisation, l'ouverture de l'entaille à la face de la peau a une largeur au plus de l'ordre de grandeur de l'épaisseur de la couche de liaison. Dans ce cas, l'expression "de l'ordre de grandeur" indique une variation comprise entre 0,2 et 5 fois environ, la largeur de l'entaille restant toujours très inférieure à la profondeur de l'entaille.

Dans un exemple, l'entaille a sa plus petite largeur pratiquement à l'ouverture ou à proximité de l'ouverture, afin que la matière plastique ne pénètre pratiquement pas dans l'entaille. Dans un autre exemple, un côté de l'ouverture de l'entaille porte un obturateur qui couvre l'ouverture. Dans un autre exemple, dans la partie voisine de l'ouverture, l'entaille a une largeur plus petite qu'à un emplacement plus éloigné de l'ouverture de l'entaille. Dans un autre exemple, l'entaille a une forme sinueuse en coupe transversale. Dans un autre exemple, l'entaille est inclinée en coupe transversale par rapport à la face opposée à la face apparente.

Dans un second mode de réalisation, l'ouverture de l'entaille à la face de la peau est suffisamment large pour que la matière plastique pénètre et forme une mousse à l'intérieur de l'entaille, la couche de liaison suivant la surface interne de l'entaille jusqu'à un emplacement distant de la surface de la peau. Dans un exemple, à proximité de l'ouverture, l'entaille a, en coupe transversale, une forme en V d'angle supérieur à 45'.

Dans un troisième mode de réalisation, qui combine les deux premiers, l'entaille comporte, depuis l'ouverture, une partie d'ouverture très large permettant la pénétration de la matière plastique, puis une partie plus profonde et étroite dans laquelle la matière plastique ne pénètre pratiquement pas.

Dans un exemple, les bords de l'ouverture présentent une saillie.

L'invention concerne aussi un appareil destiné à former les entailles dans la peau d'une pièce selon les paragraphes précédents, comprenant un bras de robot et une lame, dans lequel la lame a une section transversale adaptée à la section transversale d'une entaille à former, le bras de robot déplaçant la lame suivant une entaille à former. Dans un exemple, l'appareil comporte en outre une forme de support de la peau qui est localement arrondie à des emplacements prévus pour l'entaille.

L'invention concerne aussi un procédé de fabrication d'une pièce d'habillage selon les paragraphes précédents, dans lequel une étape de fabrication de la peau comprend la disposition de la peau sur une forme ayant une saillie suivant le trajet voulu pour l'entaille, et la coupe de l'entaille par déplacement d'un couteau de section transversale adaptée à la section de l'entaille à réaliser, puis la séparation de la peau et de la forme.

D'autres caractéristiques et avantages de l'invention seront mieux compris à la lecture de la description qui va suivre, faite en référence aux dessins annexés sur lesquels :
la figure 1 est une coupe d'une entaille formée dans une peau suivant le procédé classique ;
la figure 2 est une coupe d'une partie d'une pièce d'habillage formée avec la peau représentée sur la figure 1 et indiquant comment se pose le problème résolu par l'invention ;
les figures 3, 4, 5 et 6 représentent quatre exemples de l'invention dans sa première forme de réalisation ;
les figures 7, 8, 9 et 10 représentent des entailles dans des exemples combinant deux formes de l'invention
les figures 11 et 12 sont des coupes représentant des entailles dans d'autres exemples de l'invention correspondant à la seconde forme de réalisation de l'invention ; et
la figure 13 représente un exemple de couteau utilisé pour la formation de l'entaille du mode de réalisation de la figure 12.

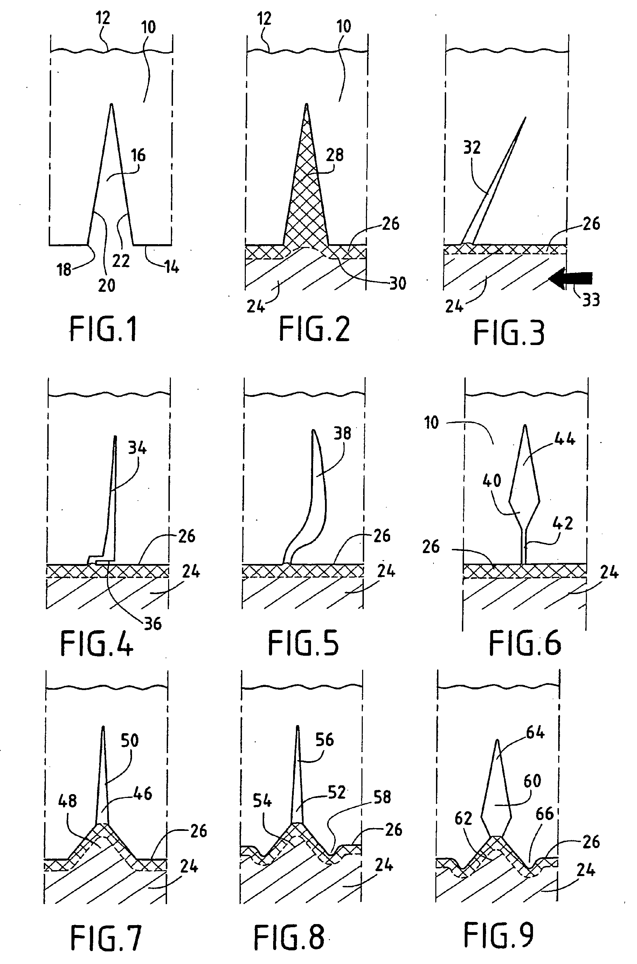

La figure 1 est une coupe d'une peau à l'emplacement d'une entaille. Plus précisément, une peau 10 ayant une face apparente 12, présentant par exemple un grain, a aussi une face interne 14 à laquelle débouche une entaille 16 par une ouverture 18. L'entaille a une forme en V délimitée par deux côtés 20 et 22.

Lorsqu'une pièce d'habillage intérieur est fabriquée avec cette peau qui délimite un côté d'une cavité de moulage, une matière plastique destinée à former une mousse est introduite du côté de la face interne 14 de la peau 10. Comme l'ouverture 18 de l'entaille est relativement grande, la matière plastique fluide peut facilement pénétrer pratiquement jusqu'au fond de l'entaille. Lorsque le moussage est terminé, l'interface entre la mousse 24, qui est normalement souple, et la surface interne 14 de la peau comporte une couche de liaison 26 qui ne forme pratiquement pas de mousse et qui constitue une sorte de pellicule continue en contact pratiquement constant avec la surface interne 14 de la peau. Cependant, la matière plastique qui a pu pénétrer dans l'entaille 16 avant le moussage forme une partie 28 qui ne comprend que peu de cavités et constitue une sorte de pont adhésif sur pratiquement toute la profondeur de l'entaille. Alors que la mousse oppose une faible résistance à la déchirure à cause de sa porosité, la matière plastique avec peu de cavités oppose au contraire une grande résistance à la déchirure.

Même si la matière plastique ne pénètre pas dans toute la profondeur de l'entaille mais seulement sur le tiers ou la moitié, elle forme un pont suffisamment résistant pour que, après polymérisation et refroidissement, l'entaille ne présente pas une résistance très inférieure à celle de la peau elle-même qui l'entoure. L'entaille ne constitue donc plus nécessairement un dispositif de rupture préférentielle à cause de cette liaison entre les deux côtés 20, 22 de l'entaille.

La solution à ce problème est d'empêcher la matière plastique de moussage de pénétrer dans l'entaille, comme suggéré par le document précité de la technique antérieure.

On peut envisager d'utiliser une fente très mince, mais il n'est pas facile de simplement réduire la largeur de l'entaille. En effet, celle-ci est normalement fabriquée par pression, et il n'est pas possible de réaliser des entailles de très faible largeur car les lames utilisées doivent être si minces qu'elles n'ont aucune durabilité.

Selon l'invention, pour empêcher la matière plastique fluide de pénétrer dans l'entaille, on donne à l'entaille une configuration telle que la couche de liaison formée par la matière plastique ne peut former, entre les deux côtés de l'entaille, qu'un pont d'épaisseur très réduite et donc de faible résistance. Ce pont peut se trouver soit près de la face interne de la peau, au niveau de l'ouverture, soit au fond de l'entaille, soit en position intermédiaire.

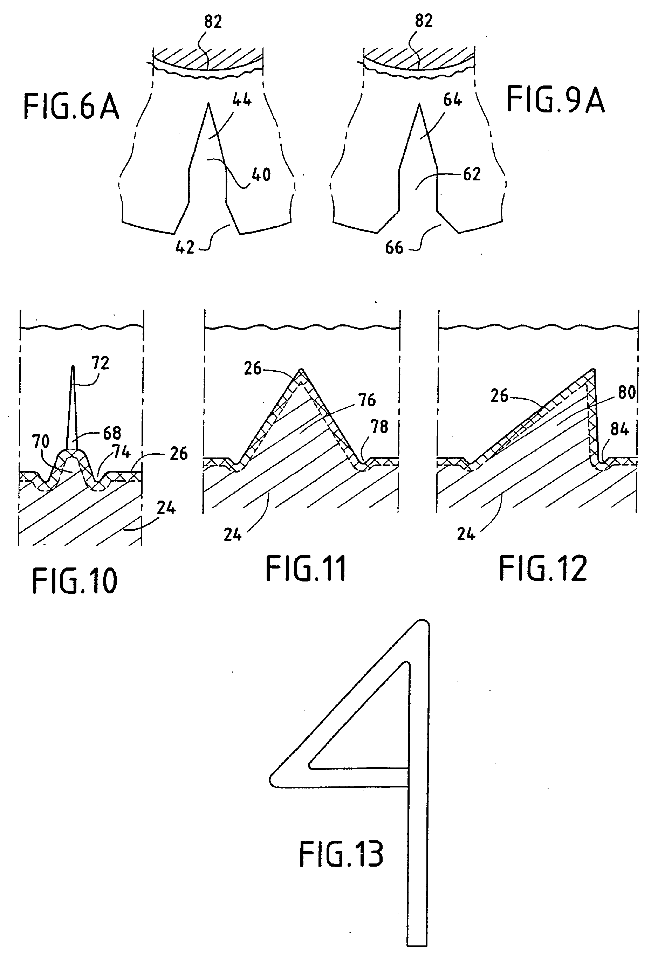

Dans les modes de réalisation des figures 3, 4, 5 et 6, le pont formé par la couche de liaison est à proximité de la surface interne de la peau. Dans les modes de réalisation des figures 11 et 12, le pont formé par la couche de liaison se trouve au fond de l'entaille. Dans les modes de réalisation des figures 7, 8, 9 et 10, ce pont se trouve en position intermédiaire.

Les figures 3 à 6 représentent des modes de réalisation dans lesquels l'ouverture de la fente à la surface interne 14 est très petite, de sorte que la couche de liaison 26 ne pénètre pratiquement pas dans l'entaille qui reste vide.

Dans le mode de réalisation de la figure 3, l'entaille est très fine de manière que son ouverture soit très petite, et elle est inclinée dans une direction opposée à la direction 33 d'écoulement de la matière plastique injectée pour former la couche de mousse. De cette manière, la matière plastique fluide n'a pas tendance à pénétrer dans l'entaille 32.

Dans le mode de réalisation de la figure 4, l'entaille 34 a une forme coudée afin qu'elle délimite au niveau de l'ouverture un obturateur 36 qui ferme pratiquement l'ouverture, de sorte que la matière plastique fluide formant la couche de liaison 26 ne peut pas pénétrer dans l'entaille.

Dans le mode de réalisation de la figure 5, l'entaille 38 a une forme sinueuse et une ouverture de petite dimension, si bien que la matière plastique fluide formant la couche de liaison 26 s'arrête à l'ouverture. Si localement la matière plastique tendait à pénétrer dans l'entaille 38, la forme sinueuse réduirait sa pénétration.

La figure 6 représente un mode de réalisation dans lequel l'entaille 40 a, du côté de la face interne, une ouverture très petite formée par une partie d'entaille 42 qui empêche l'entrée de la matière plastique fluide de la couche de liaison 26. Par contre, vers l'intérieur de la peau, l'entaille a une partie plus large 44 qui peut accroître les propriétés de rupture.

Les figures 11 et 12 illustrent la seconde forme de l'invention. Sur ces figures, l'entaille est ouverte si largement que la matière plastique fluide peut pénétrer jusqu'au fond en formant une mince couche de liaison 26 sur les parois de l'entaille. La largeur de l'entaille est telle que la matière plastique forme de la mousse presque jusqu'au fond de l'entaille. En conséquence, le pont formé entre les deux parois de l'entaille par la couche de liaison 26 n'existe qu'au fond et a une faible épaisseur. Ce pont ne présente donc qu'une faible résistance à la rupture.

Dans le mode de réalisation de la figure 11, l'entaille 76 est symétrique, et dans le mode de réalisation de la figure 12, l'entaille 80 est dissymétrique de sorte qu'un côté de l'entaille 80 est pratiquement perpendiculaire à la peau et l'autre est fortement inclinée, par exemple d'un angle de 45°. L'effet obtenu lors d'une rupture peut ainsi être asymétrique et favoriser la séparation de la partie qui doit être arrachée.

Les figures 7 à 10 représentent des modes de réalisation dans lesquels les deux formes de l'invention sont combinées. Plus précisément, les entailles de ces modes de réalisation comportent, vers la surface interne 14, une partie large donnant l'effet décrit en référence aux figures 11 et 12, et, vers le fond, une partie étroite telle que l'ouverture a une faible largeur qui donne le phénomène décrit en référence aux figures 3 à 6.

Le mode de réalisation de la figure 7 a une entaille 46 qui comporte une partie extérieure 48 largement ouverte, dont le rôle est analogue à celui qui a été décrit en référence à la figure 11. La partie interne la plus étroite de cette partie d'entaille 48 est reliée par une ouverture étroite à une seconde partie d'entaille 50 de faible largeur. Le pont formé par la couche de liaison se limite à une partie de faible épaisseur au niveau du raccord entre les deux parties 48 et 50 de l'entaille 46.

Dans le mode de réalisation de la figure 8, on a indiqué en outre la présence de saillies 58 autour de la partie extérieure d'entaille 54 qui est reliée à une partie intérieure étroite 56 dans l'entaille 52. Ces saillies 58 se forment lorsque l'outil utilisé pour former l'entaille est de type chauffant, si bien qu'un bourrelet tel que 58 (figure 8), 66 (figure 9), 74 (figure 10), 78 (figure 11) se forme autour de l'ouverture à la face interne.

Dans le mode de réalisation de la figure 9, l'entaille 60 a une partie extérieure 62 analogue à celle du mode de réalisation de la figure 8, et une partie intérieure 64 qui s'élargit après une ouverture étroite, comme dans le mode de réalisation de la figure 6.

Le mode de réalisation de la figure 10 est analogue à celui de la figure 8 et comporte une entaille 68 ayant une partie large 70 du côté de la surface interne et une partie étroite 72 du côté de la face apparente. Par rapport aux modes de réalisation des figures 7 à 9 dans lesquels la partie d'entaille proche de la surface interne 14 a une forme en V en coupe transversale, la partie d'entaille 70 se distingue par une forme en cloche qui permet de réduire l'épaisseur du pont formé à l'ouverture de la partie interne 72 d'entaille, par rapport aux modes de réalisation des figures 7 à 9.

On a indiqué précédemment que la réalisation d'une fente très mince telle que représentée sur la figure 3 ou ayant une partie localement très étroite comme indiqué sur les figures 6 et 9 posait des problèmes. En effet, la technique habituelle utilisée lors de la fabrication de la peau ne permet pas d'obtenir facilement de telles configurations, surtout parce que les outillages n'ont qu'une faible durabilité.

Selon l'invention, ce problème est résolu grâce à un procédé et un appareil spécifiques.

Ainsi, dans un procédé de fabrication de telles configurations d'entailles, celles-ci ne sont pas formées par pression ou moulage, mais par découpe à l'aide de couteaux de forme adaptée, déplacés de préférence par un robot.

Parmi les différents modes de réalisation d'entailles, ce sont les formes d'entailles des figures 6 et 9 qui présentent le plus de difficultés de réalisation à cause de la variation de largeur de l'ouverture vers le fond. Les figures 6A et 9A sont des schémas indiquant comment sont formées ces entailles qui sont les plus difficiles à réaliser.

Comme l'indiquent les figures 6A et 9A, à l'emplacement auquel doit être réalisée l'entaille, la peau est placée sur un support de forte courbure 82, et une découpe est réalisée par un couteau ayant une section de forme adaptée à celle de l'entaille élargie sur la forme. Ainsi, bien que la partie intérieure 44 de l'entaille soit plus large que la partie extérieure 42 en position d'utilisation (figure 6), on note sur la figure 6A que, lors de la fabrication, l'entaille a une largeur qui diminue constamment de l'extérieur vers l'intérieur et qui peut donc être obtenue facilement avec une lame de coupe robuste. Sur la figure 6A, la partie extérieure d'entaille 42 est destinée à former une partie à parois parallèles pratiquement (figure 6) alors que, dans le mode de réalisation de la figure 9, la partie extérieure d'entaille 66 est destinée à délimiter une partie largement ouverte.

La figure 13 représente en coupe, à titre d'exemple, une lame qui peut être utilisée pour la formation par découpe de l'entaille 80 représentée sur la figure 12. Cette lame de coupe, dont seule la pointe entaille la peau, peut être éventuellement chauffée et, dans ce cas, elle forme un bourrelet tel qu'indiqué par la référence 84 sur la figure 12.

## Revendications

1. Pièce d'habillage ayant une face apparente (12) formée par une peau (10), la pièce étant du type qui comprend une peau (10) disposée sur une mousse (24) de matière plastique, la mousse (24) étant liée à la peau par une couche continue de liaison (26) formée spontanément à l'interface peau-mousse pendant l'opération de moussage de la matière plastique fluide au contact de la peau, la peau (10) ayant un dispositif de rupture préférentielle comportant au moins une entaille qui débouche par une ouverture du côté opposé à la face apparente (12), **caractérisée en ce que**, dans toute la zone dans laquelle se trouve l'entaille pratiquement, la couche de liaison (26) est au contact uniquement de la peau (10) et de la mousse (24), et, au niveau de l'entaille et dans la direction de l'épaisseur de la peau, la couche de liaison (26) est disposée sur l'ouverture avec une épaisseur très inférieure à la profondeur de l'entaille.

2. Pièce d'habillage selon la revendication 1, **caractérisée en ce que** l'ouverture de l'entaille (32, 34, 38, 40) à la face de la peau a une largeur au plus de l'ordre de grandeur de l'épaisseur de la couche de liaison (26).

3. Pièce d'habillage selon la revendication 2, **caractérisée en ce que** l'entaille (34, 38, 40) a sa plus petite largeur pratiquement à l'ouverture ou à proximité de l'ouverture, afin que la matière plastique fluide ne pénètre pratiquement pas dans l'entaille.

4. Pièce d'habillage selon la revendication 2, **caractérisée en ce que**, dans la partie voisine de l'ouverture, l'entaille (40, 60) a une largeur plus petite qu'à un emplacement plus éloigné de l'ouverture de l'entaille.

5. Pièce d'habillage selon la revendication 2, **caractérisée en ce que** l'entaille (38, 32) a une forme choisie parmi une forme sinueuse en coupe transversale, et une forme inclinée en coupe transversale par rapport à la face opposée à la face apparente.

6. Pièce d'habillage selon la revendication 1, **caractérisée en ce que** l'ouverture de l'entaille (76, 80) à la face de la peau est suffisamment large pour que la matière plastique pénètre et forme une mousse à l'intérieur de l'entaille (76, 80), la couche de liaison (26) suivant la surface interne de l'entaille (76, 80) jusqu'à un emplacement distant de la surface de la peau.

7. Pièce d'habillage selon la revendication 1, **caractérisée en ce que** l'entaille (46, 52, 60, 68) comporte, depuis l'ouverture, une partie d'ouverture très large permettant la pénétration de la matière plastique, puis une partie plus profonde et étroite dans laquelle la matière plastique ne pénètre pratiquement pas.

8. Pièce d'habillage selon l'une quelconque des revendications précédentes, **caractérisée en ce que** les bords de l'ouverture présentent une saillie (58, 66, 74, 78, 84).

## Claims

1. Trim element having a visible face (12) formed by a skin (10), the element being of the type which comprises a skin (10) arranged on a plastics foam (24), the foam (24) being connected to the skin by a continuous bonding layer (26), formed spontaneously at the skin-foam interface during the foaming operation of the liquid plastics material in contact with the skin, the skin (10) having a preferential rupture device comprising at least one notch which opens out through an opening on the side opposing the visible face (12), **characterised in that**, in practice, in the entire zone in which the notch is located the bonding layer (26) is solely in contact with the skin (10) and the foam (24), and in the region of the notch and in the direction of the thickness of the skin, the bonding layer (26) is arranged on the opening with a thickness which is considerably less than the depth of the notch.

2. Trim element according to Claim 1, **characterised in that** the opening of the notch (32, 34, 38, 40) at the face of the skin has a width which is at most in the order of magnitude of the thickness of the bonding layer (26).

3. Trim element according to Claim 2, **characterised in that** the notch (34, 38, 40) has its smallest width virtually at the opening or in the vicinity of the opening, so that the liquid plastics material hardly penetrates into the notch.

4. Trim element according to Claim 2, **characterised in that** in the part adjacent to the opening, the notch (40, 60) has a width which is narrower than at a location which is more remote from the opening of the notch.

5. Trim element according to Claim 2, **characterised in that** the notch (38, 32) has a shape selected from a meandering shape in cross section and an inclined shape in cross section relative to the face opposing the visible face.

6. Trim element according to Claim 1, **characterised in that** the opening of the notch (76, 80) at the face of the skin is sufficiently wide for the plastics material to penetrate and form a foam inside the notch (76, 80), the bonding layer (26) following the internal surface of the notch (76, 80) as far as a location remote from the surface of the skin.

7. Trim element according to Claim 1, **characterised in that** the notch (46, 52, 60, 68) comprises, from the opening, a very wide opening part permitting the penetration of the plastics material, then a part which is deeper and narrower, into which the plastics material hardly penetrates.

8. Trim element according to any one of the preceding claims, **characterised in that** the edges of the opening have a projection (58, 66, 74, 78, 84).

## Patentansprüche

1. Verkleidungselement mit einer durch eine Haut (10) gebildeten sichtbaren Seite (12), wobei das Element von dem Typ ist, der eine auf einen Kunststoffschaum (24) aufgebrachte Haut (10) umfasst, wobei der Schaum (24) mit der Haut durch eine sich an der Haut-Schaum-Grenzfläche spontan bildende kontinuierliche Verbindungsschicht (26) verbunden ist und die Haut (10) dabei eine Sollreißeinrichtung aufweist, die wenigstens eine Einkerbung umfasst, die mit einer Öffnung auf der der sichtbaren Seite (12) entgegengesetzten Seite mündet,
**dadurch gekennzeichnet, dass** in der gesamten Zone, in der sich die Einkerbung praktisch befindet, die Verbindungsschicht (26) nur mit der Haut (10) und mit dem Schaum (24) Kontakt hat, und, auf Höhe der Einkerbung und in der Richtung der Dicke der Haut, die Verbindungsschicht (26) an der Öffnung eine Dicke aufweist, die sehr viel kleiner ist als die Tiefe der Einkerbung.

2. Verkleidungselement nach Anspruch 1, **dadurch gekennzeichnet, dass** die Öffnung der Einkerbung (32, 34, 38, 40) auf der Seite der Haut eine Breite höchstens in der Größenordung der Dicke der Verbindungsschicht (26) aufweist.

3. Verkleidungselement nach Anspruch 2, **dadurch gekennzeichnet, dass** die Einkerbung (34, 38, 40) ihre kleinste Breite praktisch in der Öffnung oder in der Nähe der Öffnung aufweist, so dass der flüssige Kunststoff praktisch nicht in die Einkerbung eindringt.

4. Verkleidungselement nach Anspruch 2, **dadurch gekennzeichnet, dass** die Einkerbung (40, 60) in dem der Öffnung benachbarten Teil eine kleinere Breite hat als an einer von der Öffnung der Einkerbung weiter entfernten Stelle.

5. Verkleidungselement nach Anspruch 2, **dadurch gekennzeichnet, dass** die Einkerbung (38, 32) eine Form hat, ausgewählt zwischen einer im Querschnitt kurvigen Form und einer im Querschnitt schrägen Form, bezogen auf die der sichtbaren Seite entgegengesetzte Seite.

6. Verkleidungselement nach Anspruch 1, **dadurch gekennzeichnet, dass** die Öffnung der Einkerbung (76, 80) auf der Seite der Haut so breit ist, dass der Kunststoff eindringt und im Innern der Einkerbung (76, 80) einen Schaum bildet, wobei die Verbindungsschicht (26) der Innenoberfläche der Einkerbung (76, 80) bis zu einer von der Oberfläche der Haut distanzierten Stelle folgt.

7. Verkleidungselement nach Anspruch 1, **dadurch gekennzeichnet, dass** die Einkerbung (46, 52, 60, 68) ab der Öffnung einen sehr breiten Öffnungsteil umfasst, der das Eindringen des Kunststoffs ermöglicht, dann einen tieferen und schmaleren Teil, in den der Kunststoff praktisch nicht eindringt.

8. Verkleidungselement nach einem der vorangehenden Ansprüche, **dadurch gekennzeichnet, dass** die Ränder der Öffnung einen Buckel (58, 66, 74, 78, 84) aufweisen.
